Europäisches Patentamt

European Patent Office

Office européen des brevets

(19)

(11) Veröffentlichungsnummer: **0 412 521 A1**

## (12) EUROPÄISCHE PATENTANMELDUNG

(21) Anmeldenummer: 90115202.5

(22) Anmeldetag: 08.08.90

(51) Int. Cl.5: **F01N 3/22**, //F02D21/08

(30) Priorität: 10.08.89 DE 3926516

(43) Veröffentlichungstag der Anmeldung:
13.02.91 Patentblatt 91/07

(84) Benannte Vertragsstaaten:
AT BE CH DE DK ES FR GB GR IT LI LU NL SE

(71) Anmelder: Oberland Mangold GmbH
Amselstrasse 4
D-8100 Garmisch-Partenkirchen(DE)

(72) Erfinder: Soldner, Willy
Kreutstrasse 15
D-8119 Grossweil(DE)
Erfinder: Mangold, Anton
Amselstrasse 4
D-8100 Garmisch-Partenkirchen(DE)

(74) Vertreter: Weber, Otto Ernst, Dipl.-Phys. et al
Weber & Heim Hofbrunnstrasse 36
D-8000 München 71(DE)

(54) Regelkreis zur Beeinflussung der Abgaszusammensetzung eines Verbrennungsmotors.

(57) Es wird ein Regelkreis zur Beeinflussung der Abgaszusammensetzung eines Verbrennungsmotors beschrieben, bei welchem dem Abgas über eine geregelte Sekundärluft-Zuführung Luft beigemischt wird. Die Regelung erfolgt in Abhängigkeit vom Signal einer Lambda-Sonde in der Weise, daß der im Abgas ermittelte Lambda-Wert in möglichst engen Grenzen um 1,0 schwankt. Die Regelung kann mit einer Abgasrückführung und/oder einer Kraftstoff-Luftgemisch-Regelung zusammenwirken.

## REGELKREIS ZUR BEEINFLUSSUNG DER ABGASZUSAMMENSETZUNG EINES VERBRENNUNGSMOTORS

Die Erfindung betrifft einen Regelkreis zur Beeinflussung der Abgaszusammensetzung eines Verbrennungsmotors, wobei im Abgasstrom eine Lambda-Sonde und ein Katalysator angeordnet sind, und wobei dem Abgas vor der Lambda-Sonde über eine gesteuerte Sekundärluftzuführung unmittelbar Sekundärluft beigemischt wird.

Bekanntlich ist es mit einem Katalysator möglich, die Schadstoffemission eines Verbrennungsmotors wirksam zu vermindern. Das Verfahren setzt voraus, daß das Kraftstoff-Luftgemisch eine stöchiometrische Zusammensetzung aufweist, die durch einen Lambda-Wert von 1,0 charakterisiert ist. Nur in sehr engem Bereich um diesen Lambda-Wert arbeitet der Katalysator mit hohem Wirkungsgrad.

Über die Lambda-Sonde wird hierbei die Abgaszusammensetzung bzw. der Restsauerstoffgehalt gemessen und in Abhängigkeit vom Ausgangssignal der Lambda-Sonde wird die Sekundärluftmenge und/oder eine Abgasrückführung geregelt.

Ferner ist es bei Vergasermotoren ohne Lambda-Regelung des Kraftstoff-Luftgemisches bekannt, für die Nachbehandlung des Abgases zur Oxydation von unverbrannten Kohlenwasserstoffen und Kohlenmonoxyd Sekundärluft in den Abgasstrom einzuleiten. Die Zuführung erfolgt in der Startphase des Motors zeitlich begrenzt, bis eine Abgastemperatur von etwa 300° Celsius erreicht ist, bei welcher der Katalysator seine Betriebstemperatur erreicht hat und somit optimal funktionieren kann.

Durch die Einspeisung von Sekundärluft wird das Abgas verdünnt, was eine Veränderung des Lambda-Wertes zur Folge hat. Aus diesem Grund ist es bei den bekannten Systemen erforderlich, die Luftzuführung nach der Startphase zu unterbinden, weil ansonsten das Abgas so stark "abgemagert" wird, daß eine unerwünschte Umkehrreaktion eintritt, die zu einem deutlichen Anstieg der Stickoxyde führt.

Die Beeinflussung des Abgases erfolgt dann ausschließlich durch den Lambda-Regelkreis mittels einer gesteuerten Abgasrückführung, die zur Absenkung der Verbrennungsspitzentemperatur dient und dadurch zu einer Stickoxyd-Senkung führt.

Diese primärseitig wirkende Maßnahme ist jedoch nicht in allen Betriebsphasen des Motors wirksam einsetzbar. So erfolgt die Abgasrüc kführung nur im mageren Motorbetrieb, d.h. z.B. im Leerlauf und in Konstantfahrtphasen. Bei Vollastbetrieb und in Beschleunigungsphasen, d.h. bei fettem Motorbetrieb, ist diese Steuerung ebenso wie die Lambda-Regelung des Kraftstoff-Luftgemisches abgeschaltet. Das hat zur Folge, daß starke Abweichungen vom effektivsten Lambda-Wert 1,0 vorhanden sind.

Der Erfindung liegt die Aufgabe zugrunde, im Bedarfsfall bei fetten Motorbetriebszuständen, insbesondere bei Beschleunigung und Vollast, eine Abgasverdünnung mit Hilfe von Sekundärluft vorzunehmen, ohne daß eine unerwünschte Abweichung vom Lambda-Wert 1,0 erfolgt, bzw. daß der Lambda-Wert in möglichst engen Grenzen um 1,0 schwankt und damit die katalytische Nachbehandlung unter optimalen Bedingungen erfolgt.

Diese Aufgabe wird dadurch gelöst, daß eine elektronische Auswerte- und Steuereinheit vorhanden ist, die eingangsseitig mit dem Ausgang der Lambda-Sonde und ausgangsseitig mit dem Steuereingang eines in der Sekundärluftzuführung liegenden Steuerventils verbunden ist, und daß die Auswerte- und Steuer einheit das Steuerventil in Abhängigkeit vom Ausgangssignal der Lambda-Sonde in der Weise ansteuert, daß der Lambda-Wert 1,0 durch Sekundärluftzuführung im wesentlichen beibehalten wird.

Die Erfindung hat den Vorteil, daß insbesondere bei Beschleunigung und Vollast des Verbrennungsmotors der Katalysator dennoch mit optimalem Lambda-Wert betrieben wird. Sinngemäß gilt dies auch für all diejenigen Betriebszustände, in welchem beispielsweise durch Störeinflüsse die Lambda-Regelung über längere Zeit an einem Grenzanschlag bleibt.

Auch in diesen Fällen wird die Regelung abgeschaltet und eine vom gemessenen Lambda-Wert unabhängige Kraftstoffmenge eingespritzt, was zur Folge hat, daß die Abgasreduzierung nicht mehr optimal erfolgen kann. Durch den erfindungsgemäßen Lambda-Regelkreis für die Sekundärluftzuführung kann trotzdem eine Abgaszusammensetzung mit einem Lambda-Wert von 1,0 erreicht werden. Die Erfindung ist besonders bei Vergasermotoren vorteilhaft einsetzbar.

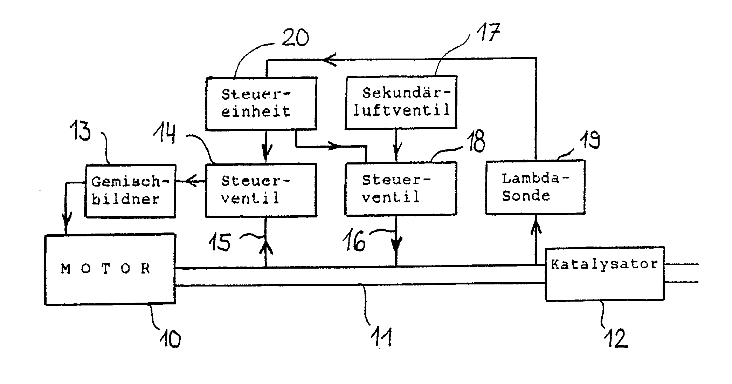

Nachfolgend wird die Erfindung anhand eines in der Zeichnung dargestellten Ausführungsbeispieles weiter beschrieben.

Die einzige Figur zeigt schematisch ein Blockschaltbild einer Lambda-Regelung der Sekundärluftzuführung in das Abgas eines Verbrennungsmotors.

In der Figur ist mit 10 ein Vergasermotor bezeichnet, in dessen Auspuffrohr 11 ein Katalysator 12 angeordnet ist. Primärseitig wird dem Vergasermotor 10 über einen Gemischbildner 13 ein Kraftstoff-Luftgemisch sowie rückgeführtes Abgas zugeführt. Die rückgeführte Abgasmenge wird über ein Steuerventil 14 bestimmt, welches in einer vom Auspuffrohr 11 abzweigenden Abgasrückführung 15 angeordnet ist.

Stromabwärts nach der Abgasrückführung 15 wird über eine Sekundärluft-Zugabe 16 Sekundärluft in das Auspuffrohr 11 geleitet. Diese Sekundärluft-Ansaugung erfolgt über ein Sekundärluft-Ventil 17, welchem ein weiteres Steuerventil 18 nachgeschaltet ist.

Zwischen der Sekundärluft-Zugabe 16 und dem Katalysator 12 befindet sich im Auspuffrohr 11 eine Lambda-Sonde 19, welche ein Signal über die augenblickliche Abgaszusammensetzung an eine elektronische Auswerte- und Steuereinheit 20 abgibt. In Abhängigkeit vom Meßsignal wird das Steuerventil 14 oder das weitere Steuerventil 18 betätigt. Im Leerlaufbetrieb und in Konstantfahrtphasen wird das Steuerventil 14 geöffnet und es erfolgt eine Abgasrückführung, wobei der Durchfluß vom gemessenen Lambda-Wert abhängt. Bei fettem Motorbetrieb ist die Abgasrückführung 15 gesperrt und es erfolgt eine Sekundärluft-Zuführung über das weitere Steuerventil 18 in Abhängikeit vom Lambda-Wert. Die Luftzuführung wird hierbei so dosiert, daß der im Abgas ermittelte Lambda-Wert in möglichst engen Grenzen um 1,0 schwankt, so daß der Katalysator 12 optimale Betriebsbedingungen hat.

**Ansprüche**

1. Regelkreis zur Beeinflussung der Abgaszusammensetzung eines Verbrennungsmotors, wobei im Abgasstrom eine Lambda-Sonde und ein Katalysator angeordnet sind,
und wobei dem Abgas vor der Lambda-Sonde über eine gesteuerte Sekundärluft-Zuführung unmittelbar Sekundärluft beigemischt wird,
dadurch **gekennzeichnet,**
daß eine elektronische Auswerte- und Steuereinheit (20) vorhanden ist, die eingangsseitig mit dem Ausgang der Lambda-Sonde (19) und ausgangsseitig mit dem Steuereingang eines in der Sekundärluft-Zuführung (16) liegenden Steuerventils (18) verbunden ist, und daß die Auswerte- und Steuereinheit (20) das Steuerventil (18) in Abhängigkeit vom Ausgangssignal der Lambda-Sonde (19) in der Weise ansteuert, daß der Lambda-Wert 1,0 aufgrund der Sekundärluft-Zuführung im wesentlichen beibehalten wird.

Europäisches Patentamt

**EUROPÄISCHER RECHERCHENBERICHT**

Nummer der Anmeldung

EP 90 11 5202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4112678 (TOYOTA JIDOSHA K.K.) <br> * das ganze Dokument * <br> --- | 1 | F01N3/22 <br> //F02D21/08 |
| X | US-A-4289103 (TOYOTA JIDOSHA K.K.) <br> * das ganze Dokument * <br> ----- | 1 | |

| | | | RECHERCHIERTE SACHGEBIETE (Int. Cl.5) |
|---|---|---|---|
| | | | F01N |

Der vorliegende Recherchenbericht wurde für alle Patentansprüche erstellt

| Recherchenort | Abschlußdatum der Recherche | Prüfer |
|---|---|---|
| DEN HAAG | 03 OKTOBER 1990 | HAKHVERDI M. |